# EUROPEAN PATENT SPECIFICATION

(11) **EP 2 741 495 B1**
(45) Date of publication and mention of the grant of the patent: **30.09.2015**
(21) Application number: 12306526.0
(22) Date of filing: 06.12.2012
(51) Int. Cl.: H04N 7/15

(54) **Method for maximizing participant immersion during a videoconference session, videoconference server and corresponding user device**
Verfahren zum Maximieren der Teilnehmerimmersion während einer Videokonferenzsitzung, Videokonferenzserver und entsprechende Benutzervorrichtung
Procédé de maximisation de l'immersion des participants pendant une session de vidéoconférence, serveur de vidéoconférence et dispositif utilisateur correspondant

(43) Date of publication of application: 11.06.2014
(73) Proprietor: ALCATEL LUCENT, 92100 Boulogne-Billancourt (FR)
(72) Inventor: Gonguet, Arnaud, 91620 Nozay (FR); Rodio, Florentin, 91620 Nozay (FR)
(74) Representative: Sciaux, Edmond

(56) References cited:
- US-A1- 2006 092 269
- US-A1- 2008 136 899
- US-A1- 2010 309 284
- US-A1- 2011 145 881
- OLIVIER MARTINOT ET AL: "Immersion in Slideworld: A methodological case study for technology selection and evaluation", SIGNAL PROCESSING CONFERENCE (EUSIPCO), 2012 PROCEEDINGS OF THE 20TH EUROPEAN, IEEE, 27 August 2012 (2012-08-27), pages 2377-2381, XP032254777, ISBN: 978-1-4673-1068-0

## Description

### TECHNICAL FIELD

The present invention relates generally to the field of telecommunications, and, more particularly, to a method, a videoconference server and a user device for maximizing participant immersion during a videoconference session.

### BACKGROUND

In the framework of videoconference, user's immersion may be defined as a mix of optimal user attention to the video and audio messages played on the videoconference user interface as well as a satisfying level of social presence feeling. The former is related to "cognitive absorption" (Argawal and Karahana, 2000) and to the "flow" experience (Csikszentmihalyi, 1990), while the latter has been defined as "the level of awareness of the co-presence of another human" (Biocca and Nowak, 2001) or the "degree of salience of the other person in the interaction" (Short, Williams and Christie, 1976). Both are related with an increased user satisfaction.

Attention to the message may be obtained thanks to entertaining live video editing, and is related to "focused attention" at the cognition level. Feeling of social presence can be provided by the representation of virtual neighbors and communication features such as instant messaging, and is related to "split attention" at the cognition level. As "focused attention" and "splint attention" are contradictory at the cognitive level, it seems difficult to reach an objective of having both attention to the message and feeling of social presence in order to create immersive videoconference applications.

Some known advanced videoconference systems focus on providing entertaining video to maximize the users' attention: The system detects who is speaking and switches the video streams to always have the speaker on the participants' screen, what creates dynamic videoconferences experience. In order to give a feeling of social presence, the other participants to the videoconference are displayed in small video frames, or as a list of names, and side-discussions are not treated as such, but instead are displayed in the main video frame. This causes the loss of attention to the main message.

Other known solutions to provide a feeling of social presence consist in using Instant Messaging for side discussions. But in that case the "focused attention" versus "split attention" dilemma will appear.

Therefore, there is a need to provide solutions for optimizing the users' immersion when using a videoconference system.

US2008/136899 discloses a method of composing a videoconferencing view wherein a user can design their own custom composed view for a videoconference depending on the users' individualized needs. The view can include segments (windows) in which participating conferees' video images are presented and accessory elements such as window borders, text, icons, and the like. The content of the accessory elements can be linked to events within the conference or the content of other objects within the view. A custom composed view for a video conference can be designed off-line by a user, loaded into a videoconferencing device, and executed to generate the custom composed view.

US2011/145881 discloses an interactive video system comprising a host adapted to receive a plurality of audio/visual (A/V) streams from a plurality of respective clients coupled to the host, wherein the host combines at least a portion of the plurality of A/V streams to produce a combined A/V stream, and wherein the host transmits the combined A/V stream to at least one of the plurality of clients for simultaneous presentation of the combined A/V stream with an event broadcast on a display device at the at least one of the plurality of clients.

The document *"Immersion in slideworld: A methodological case study for technology selection and evaluation"* Signal Processing Conference (EUSIPCO), 2012, Proceedings of the 20^{th} European, IEEE, discloses a research project aiming at creating an immersive experience in videoconferencing wherein two vicleo signal processing technologies have been developed and evaluated. A Smile detector is used to increase the feeling of social presence and a Keyword Extractor allows focusing the attention on the video message.

### SUMMARY

In one aspect, the embodiments disclosed herein relate to a method for maximizing a participant's immersion during a videoconference session through a videoconference system, comprising the following steps:
displaying on at least one user interface used by a participant to said videoconference session a main frame containing main messages relating to a presentation or a topic associated with said videoconference session and at least one secondary frame relating to a social presence element during said videoconference session;
calculating, during a planning step prior to said videoconference session, a complexity score based on an estimation of one or both of a complexity level and of the participant pre knowledge of said presentation or topic; and
automatically adapting, during said videoconference session, saliency of one or both of said main frame and said at least one secondary frame on said user interface based on said complexity score.

In one embodiment, the calculation of a complexity score based on an estimation of the complexity level of said presentation or topic may comprise receiving from a presenter of said presentation or topic, during said planning step, an explicit declaration of said complexity level.

Alternatively or in combination, the calculation of a complexity score based on an estimation of the complexity level of said presentation or topic may comprise preloading presentation slides during said planning step, and deducing an estimation of said complexity level from a text analysis of said presentation slides.

Deducing an estimation of said complexity level from a text analysis of said presentation slides can be performed advantageously on a per slide basis or on a sub group of slides basis.

In some embodiments, calculating a complexity score based on an estimation of the participant pre knowledge of said presentation or topic may comprise receiving from said participant, during said planning step, an explicit declaration of his pre knowledge.

Alternatively or in combination, calculating a complexity score based on an estimation of the participant pre knowledge of said presentation or topic may comprise extracting from at least one database information connecting said participant to said presentation or topic.

The step of adapting saliency may comprise one or more actions such as:
modifying one or both of the relative sizes and disposal of said main frame and said at least one secondary frame;
increasing or reducing possible interactions of said participant with said at least one secondary frame;
activating or deactivating the displaying of said at least one secondary frame;
modulating a volume of an audio message played in connection with said main frame or said at least one secondary frame.

In another aspect, the embodiments disclosed herein relate to a videoconference server for managing a videoconference session during which a main frame containing main messages relating to a presentation or a topic associated with said videoconference session and at least one secondary frame relating to a social presence element are displayed on at least one remote user interface used by a participant to said videoconference session, wherein said videoconference server is adapted to calculate, during a planning step prior to said videoconference session, a complexity score based on an estimation of one or both of a complexity level and of the participant pre knowledge of said presentation or topic, so that saliency of one or both of said main frame and said at least one secondary frame on said user interface can be automatically adapted based on said complexity score.

In some embodiments, the videoconference server comprises an event planner module adapted to receive registration of said participant to said videoconference session, and said event planner module may comprise:
a presentation evaluator module adapted to evaluate, prior to said videoconference session, said complexity level from preloaded presentation slides;
a user knowledge evaluator module adapted to evaluate, prior to said videoconference session, said participant pre knowledge from information pre stored in a user knowledge database;
a complexity evaluator module adapted to calculate and deliver said complexity score based on one or both of said complexity level and said participant pre knowledge.

According to some embodiments, the videoconference server further comprises an immersion optimizer module adapted to receive said complexity score and to define saliency parameters linked to one or both of said main frame and said at least one secondary frame based on said complexity score.

Alternatively, said saliency parameters can be defined at the user device side. Accordingly, in another aspect, some embodiments relate to a user device enabling a participant to a videoconference session to connect to a videoconference server, wherein said user device comprises:
a user interface adapted for displaying, during said videoconference session, a main frame containing main messages relating to a presentation or a topic associated with said videoconference session and at least one secondary frame relating to a social presence element;
a receiver for receiving data streams associated with said main messages and said at least one secondary frame, and a complexity score from a videoconference server, wherein said complexity score is based on an estimation of one or both of a complexity level and of the participant pre knowledge of said presentation or topic; and
an immersion optimizer module which is adapted to define saliency parameters linked to one or both of said main frame and said at least one secondary frame based on said complexity score.
a control module for automatically adapting saliency of one or both of said main frame and said at least one secondary frame on said user interface based on said saliency parameters.

Additional aspects of the invention will be set forth, in part, in the detailed description, figures and any claims which follow, and in part will be derived from the detailed description, or can be learned by practice of the invention. It is to be understood that both the foregoing general description and the following detailed description are exemplary and explanatory only and are not restrictive of the invention as disclosed.

### Brief Description of the Drawings

Some embodiments of apparatus and/or methods in accordance with embodiments of the present invention are now described, by way of example only, and with reference to the accompanying drawings, in which:
- figure 1 is a simplified schematic diagram illustrating a videoconference system according to an embodiment of the present invention;
- figure 2 is a flow diagram illustrating a method for maximizing a participant's immersion during a videoconference session according to an embodiment of the present invention;
- figures 3a and 3b show examples of frames displayed on a user interface.

### DETAILED DESCRIPTION

The figures and the following description illustrate specific exemplary embodiments of the invention. Like elements or method steps in the various figures may be denoted by like reference numerals for consistency.

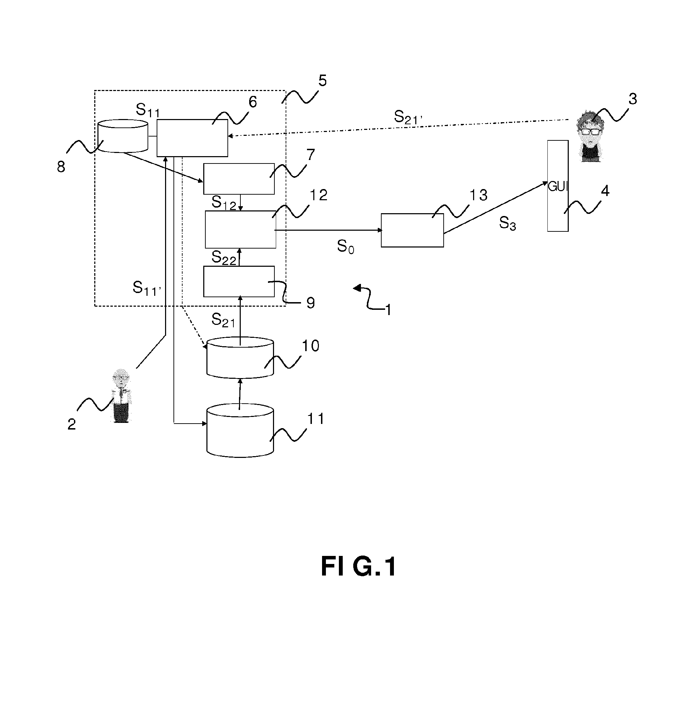

Referring to figure 1, some elements of a videoconference system for implementing a method according to an embodiment of the present invention are shown. For simplifying the following description, it is assumed that videoconference system comprises a videoconference server 1 used to schedule and managing a videoconference session between a presenter 2 and a participant 3, although the principles which will be discussed hereinafter can be applied whatever the number of participants to a videoconference session. It is further assumed that participant 3 will use, during the videoconference session, a user device (not shown) such as a personal computer, a portable communication device (mobile phone, PDA...) or more generally any type of communication apparatus enabling participant 3 to connect to videoconference server 1 and comprising a user interface 4 adapted to play video/images and audio messages during the videoconference session.

For the purpose of immersion, user interface 4 may be used to display, during the videoconference session, a main video frame displaying main messages such as the presenter and his slides, and of one of several secondary frames with social presence elements such as a list of attendees, small video frames, instant messaging area...

As a result of experiments, the applicant discovered that, depending on the complexity of the main messages, the feeling of social presence may positively or negatively impact overall user satisfaction, the feeling of immersion and the understanding of the message. More specifically, experiments shows that if the auditor is familiar with the main message, for instance with a topic supported by a slides presentation, or if the content of the message is simple, then the social presence features increases the immersion; on the contrary, if the auditor is not familiar with the main message or if the content is complex, then the social presence features are negatively correlated with the feeling of immersion.

Based on these experiments, it is proposed here to adapt automatically the saliency of one or both of the main frame and at least one secondary frame played on user interface 4 during the videoconference session based a complexity score which has been calculated, prior to said session, by using an estimation of:
- the complexity level of the presentation or of the topics which will be discussed during the videoconference session; and/or
- the participant pre knowledge about the presentation or topics.

More precisely, in the embodiment shown in figure 1, videoconference server 1 comprises an event planner module 5 adapted to receive registrations of presenter 2 and participant 3 to a videoconference session, e.g. through an event registration module 6.

Event planner module 5 includes a presentation evaluator module 7 adapted to evaluate, prior to said videoconference session, the complexity level of the presentation or of the topics which will be discussed during the videoconference session.

The complexity of the presentation can be either explicitly declared at the presentation setup, or deduced from text analysis and contextual heuristics. In the first case, presenter 2 sends to server 1 an explicit declaration at any time between the registration and the beginning of the videoconference session, or server 1 collects filled explicit questionnaires from presenter 2 (step S_{11'} on figure 1). In the second case, presentation slides, possibly with complexity tags, are collected and preloaded in a slides database 8 (step S₁₁ on figure 1). Presentation evaluator module 7 then gets the presentation's slides from slides database 8, and performs text analysis to deduce the presentation's topic and complexity (step S₁₂ on figure 1).

Event planner module 5 also includes a user knowledge evaluator module 9 adapted to evaluate, prior to said videoconference session, participant pre knowledge from information pre stored in a user knowledge database 10 (step S₂₂ on figure 1). The existing knowledge of the auditor can be either explicitly declared, e.g. through questionnaires filled in and sent by participant 3 to server 1 when registering to the presentation to tell whether or not he knows about the presentation's topic (step S_{21'} on figure 1), and/or deduced from learning mechanisms based on his attendance to past similar presentation, the document he wrote...

If collected through explicit questionnaires, a possibility is to use the explicitly provided presentation topic and a 5-range Likert scale about the awareness on the presentation topic with "no awareness, few knowledge, average knowledge, good knowledge and expert" as results. The value representative of the participant pre knowledge can then be normalized from 1 to 5. Alternatively or in combination, user knowledge database 10 can be populated using information extracted from other existing databases, such as a corporate database 11 which would gather information associated with the participant about the past attended presentations, the know-how, the training...

Event planner module 5 also includes a complexity evaluator module 12 adapted to calculate and deliver a complexity score based on one or both of said complexity level and said participant pre knowledge. For instance, complexity evaluator 12 may consider, e.g. compare both the presentation topic/complexity and the user knowledge to decide a "Complexity Score". One example could be that:
- if the topic and the user knowledge are matching, the "complexity score" is "low",
- if they are partially matching, the "complexity score" is "medium"
- and they are not matching, the "complexity score" is "high".

Another option is to measure the adequacy between the presentation topics and the user knowledge using heuristics such as "if the user had a training less than six months ago on the topics, then his knowledge is average" or "if the user wrote a paper on the topics then his knowledge is expert"...

Complexity score as calculated by complexity evaluator module 12 is delivered to an immersion optimizer module 13 adapted to define saliency parameters linked to one or both of said main frame and said at least one secondary frame based on said complexity score, in order to maximize the level of immersion. The Applicant's experiments show that if the "complexity score" is high, the social presence saliency should be low, and vice versa, such that the participant experiences an optimized immersion feeling.

Saliency parameters linked with one or both of said main frame and said at least one secondary frame comprise any parameters controlling one or more actions from the following set of actions:
- modifying one or both of the relative sizes and disposal of said main frame and said at least one secondary frame;
- increasing or reducing possible interactions of said participant with said at least one secondary frame;
- activating or deactivating the displaying of said at least one secondary frame;
- modulating a volume of an audio message to be played in connection with said main frame or said at least one secondary frame.

In one possible embodiment, immersion optimizer module 13 is part of videoconference server 1. In this case, server 1 and in particular immersion optimizer module 13 sends, during the videoconference session, data streams associated with main messages and the secondary frames, as well as salient parameters to a receiver (not shown) of the user device. This implementation can be costly in bandwidth between the server and the participant's user device, more especially when there are several remote participants to the same videoconference, but can be used whatever the capabilities of the users devices.

Alternatively, immersion optimizer module 13 is part of user device. In that case, server 1 and in particular immersion optimizer module 13 sends, during the videoconference session, data streams associated with main messages and the secondary frames, as well as the estimation score to the receiver of the user device. This solution requires less bandwidth for communication between the videoconference server and the user devices, but requires dedicated user devices.

In both cases, a control module (not shown) of the user device can automatically adapt saliency of one or both of the main frame and at least one secondary frame on user interface 4 based on said saliency parameters.

Immersion optimizer module 13 may be, as an example, implemented as part as a Model-View-Controller (MVC) logic, where the modification of the saliency of an element would be implemented as part of the "View" logic and the restriction of some interactions would be implemented as "Model" logic based on the "complexity score".

According to another embodiment, server 1 can dynamically adapt the optimal GUI for maximized immersion, depending on the instant complexity of the message. To do so, presentation evaluator module 7 advantageously estimates the topics/complexity level on a per slide basis or on a sub group of slides basis rather than globally. Then complexity evaluator module 12 can compute a "complexity score" per slide or dub group of slides and the GUI can be optimized more dynamically.

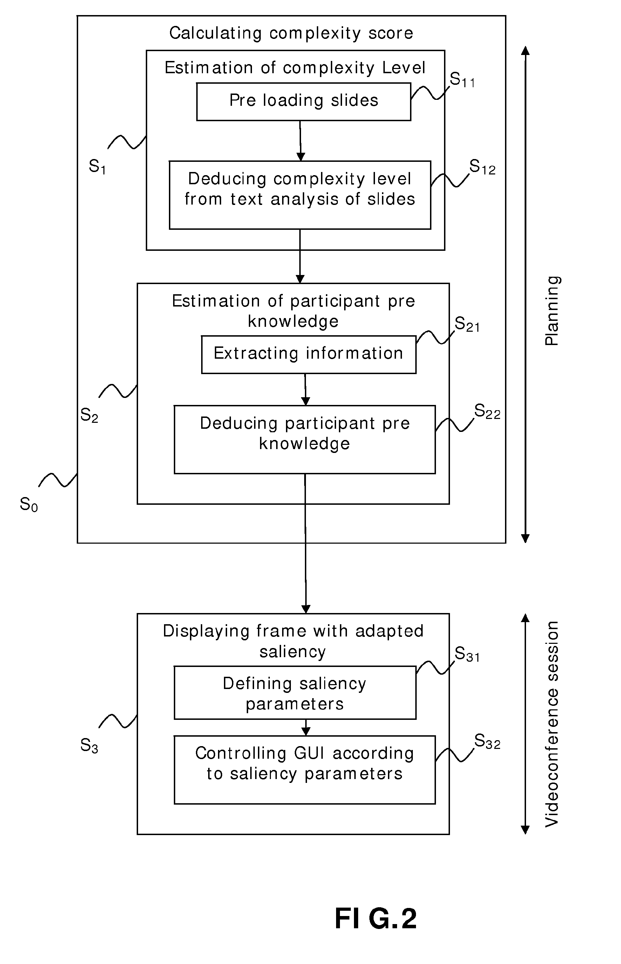

The invention can also be considered in terms of a method for maximizing a participant's immersion during a videoconference session. Figure 2 is a flow diagram illustrating such a method according to an embodiment of the present invention.

The method begins with step S₀ wherein a complexity score is calculated based, in the exemplary embodiment, on an estimation of both the complexity level of a presentation and the participant pre knowledge by the videoconference server, at a planning step prior to the videoconference session. In step S₁, the complexity level of the presentation is estimated, for instance by pre loading slides of the presentation (step S₁₁) and then deducing the complexity level based on a text analysis of the slides (step S₁₂).

In step S₂, the participant pre knowledge about the topic is estimated, for instance by extracting (step S₂₁) from database 10 information connecting said participant to the presentation or topic, and then deducing the participant pre knowledge (step S₂₂).

During videoconference session, the complexity score calculated in the planning step is used for defining (step S₃₁) saliency parameters linked to the main frame and the secondary frame(s) with social presence element(s). The graphical user interface of the participant can then be controlled according to the saliency parameters (step S₃₂).

Note that the steps of the method can be performed in any logically-consistent order, and in some embodiments other steps may be added.

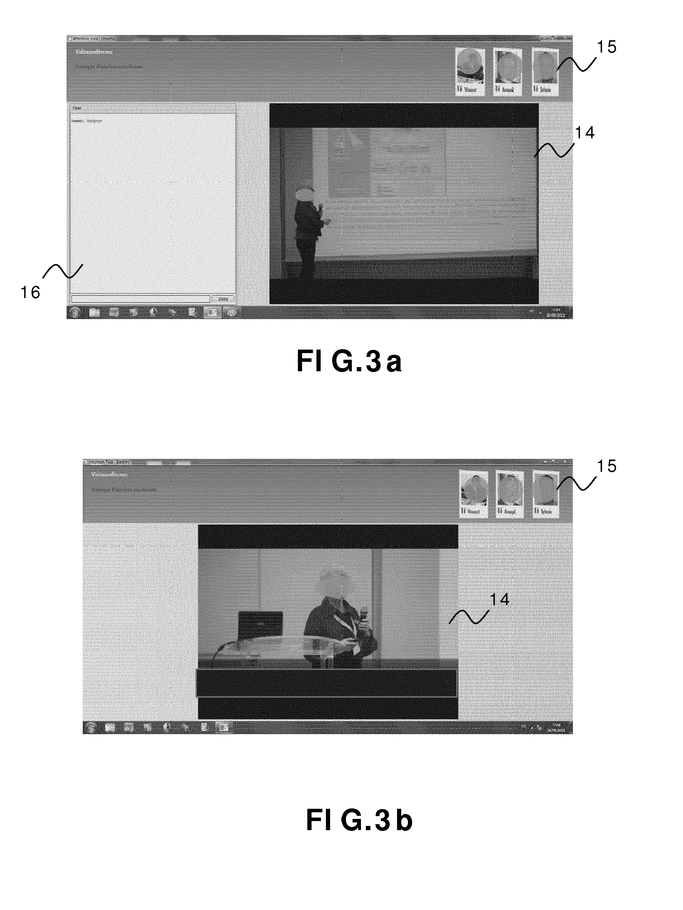

To illustrate some of the invention principles, figures 3a and 3b show exemplary shoot screens of frames which can be displayed on a user interface:

Both figures show a main frame 14 displaying a video showing the presenter and the slides of the presentation and a first secondary frame 15 with list of participant icons. Figure 3a also shows a second secondary frame 16 for instant messaging. Thus main frame 14 contains main messages while both secondary frames 15 and 16 relate to social presence element. On figure 3a, both secondary frames 15 and 16 are activated, while on figure 3b, secondary frame 16 has been deactivated, relative disposal of main frame 14 and secondary frame 15 has been modified, and a zoom has been performed on the video played on main frame 15 in order to focus the participant attention on the presenter.

Although some embodiments of the present invention have been illustrated in the accompanying Drawings and described in the foregoing Detailed Description, it should be understood that the present invention is not limited to the disclosed embodiments, but is capable of numerous rearrangements, modifications and substitutions without departing from the invention as set forth and defined by the following claims.

A person skill in the art would readily recognize that steps of various above-described methods can be performed by programmed computers. Herein, some embodiments are intended to cover program storage devices, e.g., digital data storage media, which are machine or computer readable and encode machine-executable or computer-executable programs of instructions where said instructions perform some or all of the steps of methods described herein. The program storage devices may be, e.g., digital memories, magnetic storage media such as a magnetic disks or tapes, hard drives, or optically readable digital storage media. The embodiments are also intended to cover computers programmed to perform said steps of methods described herein.

## Claims

1. A method for maximizing a participant's immersion during a videoconference session through a videoconference system comprising the following steps:
displaying on at least one user interface (4) used by a participant (3) to said videoconference session a main frame containing main messages relating to a presentation or a topic associated with said videoconference session and at least one secondary frame relating to a social presence element during said videoconference session;
**characterized in that** the method further comprises the steps of:
calculating (S₀), during a planning step prior to said videoconference session, a complexity score based on an estimation of one or both of a complexity level and of the participant pre knowledge of said presentation or topic; and
automatically adapting (S₃), during said videoconference session, saliency of one or both of said main frame and said at least one secondary frame on said user interface based on said complexity score.

2. A method according to claim 1, wherein calculating (S₀) a complexity score based on an estimation of the complexity level of said presentation or topic comprises receiving (S_{11'}) from a presenter (2) of said presentation or topic, during said planning step, an explicit declaration of said complexity level.

3. A method according to claim 1, wherein calculating (S₀) a complexity score based on an estimation of the complexity level of said presentation or topic comprises preloading (S₁₁) presentation slides during said planning step, and deducing (S₁₂) an estimation of said complexity level from a text analysis of said presentation slides.

4. A method according to claim 3, wherein deducing (S₁₂) an estimation of said complexity level from a text analysis of said presentation slides is performed on a per slide basis or on a sub group of slides basis.

5. A method according to anyone of claims 1 to 4, wherein calculating (S₀) a complexity score based on an estimation of the participant pre knowledge of said presentation or topic comprises receiving (S_{21'}) from said participant, during said planning step, an explicit declaration of his pre knowledge.

6. A method according to anyone of claims 1 to 4, wherein calculating (S₀) a complexity score based on an estimation of the participant pre knowledge of said presentation or topic comprises extracting (S₂₁) from at least one database (10) information connecting said participant (3) to said presentation or topic.

7. A method according to anyone of claims 1 to 6, wherein adapting (S₃) saliency comprises modifying one or both of the relative sizes and disposal of said main frame and said at least one secondary frame.

8. A method according to anyone of claims 1 to 7, wherein adapting (S₃) saliency comprises increasing or reducing possible interactions of said participant with said at least one secondary frame.

9. A method according to anyone of claims 1 to 8, wherein adapting (S₃) saliency comprises activating or deactivating the displaying of said at least one secondary frame.

10. A method according to anyone of claims 1 to 9, wherein adapting (S₃) saliency comprises modulating a volume of an audio message played in connection with said main frame or said at least one secondary frame.

11. A method according to anyone of the preceding claims, wherein said social presence element comprises a list of attendees to said videoconference session, or a video, or an instant messaging area.

12. A videoconference server (1) for managing a videoconference session during which a main frame containing main messages relating to a presentation or a topic associated with said videoconference session and at least one secondary frame relating to a social presence element are displayed on at least one remote user interface (4) used by a participant (3) to said videoconference session, **characterized in that** said videoconference server (1) is adapted to calculate, during a planning step prior to said videoconference session, a complexity score based on an estimation of one or both of a complexity level and of the participant pre knowledge of said presentation or topic, so that saliency of one or both of said main frame and said at least one secondary frame on said user interface (4) can be automatically adapted during said videoconference session, based on said complexity score.

13. A videoconference server (1) according to claim 12, comprising an event planner module (5) which is adapted to receive registration of said participant (3) to said videoconference session, said event planner module (5) comprising:
a presentation evaluator module (7) adapted to evaluate, prior to said videoconference session, said complexity level from preloaded presentation slides;
a user knowledge evaluator module (9) adapted to evaluate, prior to said videoconference session, said participant pre knowledge from information pre stored in a user knowledge database (10);
a complexity evaluator module (12) adapted to calculate and deliver said complexity score based on one or both of said complexity level and said participant pre knowledge.

14. A videoconference server (1) according to claim 13, further comprising an immersion optimizer module (13) adapted to receive said complexity score and to define saliency parameters linked to one or both of said main frame and said at least one secondary frame based on said complexity score.

15. A videoconference server (1) according to claim 14, wherein said saliency parameters linked with one or both of said main frame and said at least one secondary frame comprise any parameters controlling one or more actions from the following set of actions:
modifying one or both of the relative sizes and disposal of said main frame and said at least one secondary frame;
increasing or reducing possible interactions of said participant with said at least one secondary frame;
activating or deactivating the displaying of said at least one secondary frame;
modulating a volume of an audio message to be played in connection with said main frame or said at least one secondary frame.

16. A user device enabling a participant to a videoconference session to connect to a videoconference server (1), wherein said user device comprises:
a user interface (4) adapted for displaying, during said videoconference session, a main frame containing main messages relating to a presentation or a topic associated with said videoconference session and at least one secondary frame relating to a social presence element;
**characterized in that** the user device further comprises
a receiver for receiving data streams associated with said main messages and said at least one secondary frame, and an complexity score from a videoconference server, wherein said complexity score is calculated during a planning step prior to said videoconference session and is based on an estimation of one or both of a complexity level and of the participant pre knowledge of said presentation or topic; and
an immersion optimizer module (13) which is adapted to define saliency parameters linked to one or both of said main frame and said at least one secondary frame based on said complexity score.
a control module for automatically adapting saliency of one or both of said main frame and said at least one secondary frame on said user interface (4), during said videoconference session, based on said saliency parameters.

17. A user device according to claim 16, wherein said saliency parameters linked with one or both of said main frame and said at least one secondary frame comprise any parameters controlling one or more actions from the following set of actions:
modifying one or both of the relative sizes and disposal of said main frame and said at least one secondary frame;
increasing or reducing possible interactions of said participant with said at least one secondary frame;
activating or deactivating the displaying of said at least one secondary frame;
modulating a volume of an audio message to be played in connection with said main frame or said at least one secondary frame.

## Patentansprüche

1. Verfahren zum Maximieren der Teilnehmerimmersion während einer Videokonferenzsitzung durch ein Videokonferenzsystem, die folgenden Schritte umfassend:
auf mindestens einer Benutzeroberfläche (4), die von einem Teilnehmer (3) an besagter Videokonferenzsitzung benutzt wird, das Anzeigen eines Hauptrahmens, der Mitteilungen enthält, die sich auf eine Präsentation oder ein Thema beziehen, die mit besagter Videokonferenzsitzung in Zusammenhang stehen, und mindestens eines sekundären Rahmens, der sich während besagter Videokonferenzsitzung auf ein Element der Präsenz in sozialen Netzwerken bezieht;
**dadurch gekennzeichnet, dass** das Verfahren weiterhin die folgenden Schritte umfasst:
in einem Planungsschritt vor besagter Videokonferenzsitzung das Berechnen (S₀) einer Komplexitätsbewertung auf der Grundlage einer Abschätzung eines oder beider der Werte Komplexitätssgrad und Vorwissen des Teilnehmers hinsichtlich besagter Präsentation bzw. besagten Themas; und
das automatische anpassen (S₃) während besagter Videokonferenzsitzung des Hervorhebens eines oder beider von besagtem Hauptrahmen und besagtem, mindestens einen Sekundärrahmen auf besagter Benutzeroberfläche, was auf der Grundlage besagter Komplexitätsbewertung erfolgt.

2. Verfahren nach Anspruch 1, wobei das Berechnen (S₀) einer Komplexitätsbewertung auf der Grundlage einer Abschätzung des Komplexitätsgrads besagter Präsentation oder besagten Themas während besagtem Planungsschritt das Empfangen (S_{11'}) einer ausdrücklichen Angabe zu besagtem Komplexitätsgrad von einem Moderator (2) besagter Präsentation oder besagten Themas umfasst.

3. Verfahren aus Anspruch 1, wobei das Berechnen (S₀) eines Komplexitätsgrads auf der Grundlage einer Abschätzung des Komplexitätsgrads besagter Präsentation oder besagten Themas das Vorladen (S₁₁) von Präsentationsfolien während besagten Planungsschritts umfasst, und ebenso das Ableiten (S₁₂) einer Abschätzung besagten Komplexitätsgrads auf der Grundlage einer Textanalyse besagter Präsentationsfolien.

4. Verfahren nach Anspruch 3, wobei das Ableiten (S₁₂) einer Abschätzung besagten Komplexitätsgrads auf der Grundlage einer Textanalyse besagter Präsentationsfolien Folie für Folie oder auf der Grundlage von Folien-Untergruppen erfolgt.

5. Verfahren nach einem beliebigen der Ansprüche 1 bis 4, wobei das Berechnen (S₀) einer Komplexitätsbewertung auf der Grundlage einer Abschätzung des Vorwissens der Teilnehmer zu besagter Präsentation oder besagtem Thema umfasst, dass von besagtem Teilnehmer während des Planungsschritts der Empfang (S_{21'}) einer expliziten Angabe zu seinem Vorwissen erfolgt.

6. Verfahren nach einem beliebigen der Ansprüche 1 bis 4, wobei das Berechnen (S₀) einer Komplexitätsbewertung auf der Grundlage einer Abschätzung des Vorwissens der Teilnehmer zu besagter Präsentation oder besagtem Thema das Abrufen (S₂₁) von Informationen aus mindestens einer Datenbank (10) umfasst, die besagten Teilnehmer (3) mit besagter Präsentation oder besagtem Thema in Beziehung setzen.

7. Verfahren nach einem jeglichen der Ansprüche 1 bis 6, wobei das Anpassen (S₃) des Hervorhebens umfasst, eine oder beide der relativen Größen und Anordnungen besagten Hauptrahmens und besagten mindestens einen Sekundärrahmens zu modifizieren.

8. Verfahren nach einem jeglichen der Ansprüche 1 bis 7, wobei das Anpassen (S₃) des Hervorhebens umfasst, die möglichen Interaktionen des Teilnehmers mit besagtem, mindestens einen Sekundärrahmen zu erhöhen oder zu reduzieren.

9. Verfahren nach einem jeglichen der Ansprüche 1 bis 8, wobei das Anpassen (S₃) des Hervorhebens umfasst, die Anzeige besagten mindestens einen Sekundärrahmens zu aktivieren oder zu deaktivieren.

10. Verfahren nach einem jeglichen der Ansprüche 1 bis 9, wobei das Anpassen (S₃) des Hervorhebens umfasst, die Lautstärke einer Audiomitteilung abzustimmen, die im Zusammenhang mit besagtem Hauptrahmen oder besagtem mindestens einen Sekundärrahmen abgespielt wird.

11. Verfahren nach einem beliebigen der vorstehenden Ansprüche, wobei besagtes Element der Präsenz in sozialen Netzwerken eine Liste von Teilnehmern an besagter Videokonferenzsitzung, ein Video oder einen Sofortnachrichtenbereich umfasst.

12. Videokonferenzserver (1) für die Verwaltung einer Videokonferenzsitzung, im Verlauf derer ein Hauptrahmen, der Hauptnachrichten enthält, die mit einer Präsentation oder einem Thema in Zusammenhang stehen, die besagter Videokonferenzsitzung zugeordnet sind, und mindestens ein Sekundärrahmen, der mit einem Element der Präsenz in sozialen Netzwerken in Zusammenhang steht, auf mindestens einer entfernten Benutzeroberfläche (4) angezeigt werden, die von einem Teilnehmer (3) an besagter Videokonferenzsitzung benutzt wird, **dadurch gekennzeichnet, dass** besagter Videokonferenzserver (1) dafür ausgelegt ist, im Zuge eines Planungsschritts vor besagter Videokonferenzsitzung einen Komplexitätsgrad zu berechnen, der auf einer Abschätzung des Komplexitätsgrads oder des Vorwissens des Teilnehmers zu besagter Präsentation oder besagtem Thema bzw. auf beidem beruht, so dass die Hervorhebung eines der beiden Rahmen oder beider, des besagten Hauptrahmens und besagten, mindestens einen Sekundärrahmens, auf besagter Benutzeroberfläche (4) während besagter Videokonferenzsitzung auf der Grundlage besagten Komplexitätsgrads automatisch angepasst werden kann.

13. Videokonferenzserver (1) nach Anspruch 12, ein Eventplanermodul (5) umfassend, dass für den Empfang der Registrierung besagten Teilnehmers (3) für besagte Videokonferenzsitzung ausgelegt ist, wobei besagtes Eventplanermodul (5) umfasst:
ein Präsentationsevaluierungsmodul (7), ausgelegt dafür, vor besagter Videokonferenzsitzung besagten Komplexitätsgrad vorgeladener Präsentationsfolien zu evaluieren;
ein Modul zur Evaluierung des Benutzervorwissens (9), ausgelegt dafür, vor besagter Videokonferenzsitzung das Vorwissen besagten Teilnehmers auf der Grundlage von in einer Datenbank zum Benutzer-Vorwissen (10) gespeicherten Informationen zu evaluieren;
ein Komplexitäts-Evaluierungsmodul (12), ausgelegt dafür, besagte Komplexitätsbewertung auf der Grundlage des besagten Komplexitätsgrads oder besagen Teilnehmervorwissens oder beider Faktoren bereitzustellen.

14. Ein Videokonferenzserver (1) nach Anspruch 13, weiterhin ein Modul zur Immersionsoptimierung (13) umfassend, das ausgelegt ist für den Empfang besagter Komplexitätsbewertung und auf der Grundlage besagter Komplexitätsbewertung für das Definieren der Hervorhebungsparameter, die mit besagtem Hauptrahmem, besagtem mindestens einen Sekundärrahmen oder beiden in Verbindung stehen.

15. Ein Videokonferenzserver (1) nach Anspruch 14, wobei besagte Hervorhebungsparameter, die mit besagtem Hauptrahmen, besagtem mindestens einen Sekundärrahmen oder beiden in Verbindung stehen, jegliche Parameter umfassen, die eine oder mehrere Aktionen aus folgendem Satz an Aktionen steuern:
Modifizieren einer oder beider relativer Größen und Bereitstellung besagten Hauptrahmens und besagten, mindestens einen Sekundärrahmens;
Erhöhen oder Reduzieren möglicher Interaktionen besagten Teilnehmers mit besagtem, mindestens einen Sekundärrahmen;
Aktivieren oder Deaktivieren des Anzeigens besagten, mindestens einen Sekundärrahmens;
Abstimmen der Lautstärke einer Audiomitteilung, die im Zusammenhang mit besagtem Hauptrahmen oder mindestens einen Sekundärrahmen abzuspielen ist.

16. Ein Benutzerendgerät, das den Teilnehmer einer Videokonferenzsitzung in die Lage versetzt, sich mit einem Videokonferenzserver (1) zu verbinden, wobei besagtes Benutzerendgerät umfasst:
eine Benutzeroberfläche (4), dafür ausgelegt, um während besagter Videokonferenzsitzung einen Hauptrahmen anzuzeigen, der Mitteilungen enthält, die sich auf eine Präsentation oder ein Thema beziehen, die mit besagter Videokonferenzsitzung in Zusammenhang stehen, und mindestens eines sekundären Rahmens, der sich auf ein Element der Präsenz in sozialen Netzwerken bezieht;
**dadurch gekennzeichnet, dass** das Benutzerendgerät weiterhin umfasst:
einen Empfänger für den Empfang von Datenströmen, die mit besagten Hauptmitteilungen in Verbindung stehen
und besagten, mindestens einen Sekundärrahmen sowie eine Komplexitätsbewertung eines Videokonferenzservers, wobei besagte Komplexitätsbewertung im Zuge eines Planungsschritts vor besagter Videokonferenzsitzung berechnet wird und auf einer Abschätzung des Komplexitätsgrads besagter Präsentation oder besagten Themas, des Vorwissens des Teilnehmers zu besagter Präsentation oder besagtem Thema oder beider beruht; und
ein Modul zur Immersionsoptimierung (13), dafür ausgelegt, die Hervorhebungsparameter festzulegen, die auf der Grundlage besagter Komplexitätsbewertung mit besagtem Hauptrahmen oder besagtem, mindestens einen Sekundärrahmen oder beiden verbunden sind;
ein Steuerungsmodul für die automatische Anpassung der Hervorhebung des Hauptrahmens oder des mindestens einen Sekundärrahmens bzw. beider auf besagter Benutzeroberfläche (4) im Verlauf besagter Videokonferenzsitzung, was auf der Grundlage der Hervorhebungsparameter erfolgt.

17. Benutzerendgerät nach Anspruch 16, wobei besagte Hervorhebungsparameter, die mit besagtem Hauptrahmen, besagtem mindestens einen Sekundärrahmen oder beiden in Verbindung stehen, jegliche Parameter umfassen, die eine oder mehrere Aktionen aus folgendem Satz an Aktionen steuern:
Modifizieren einer oder beider relativer Größen und Bereitstellung besagten Hauptrahmens und besagten, mindestens einen Sekundärrahmens;
Erhöhen oder Reduzieren möglicher Interaktionen besagten Teilnehmers mit besagtem, mindestens einen Sekundärrahmen;
Aktivieren oder Deaktivieren des Anzeigens besagten, mindestens einen Sekundärrahmens;
Abstimmen der Lautstärke einer Audiomitteilung, die im Zusammenhang mit besagtem Hauptrahmen oder mindestens einen Sekundärrahmens abzuspielen ist.

## Revendications

1. Procédé de maximisation de l'immersion d'un participant pendant une session de vidéoconférence par l'intermédiaire d'un système de vidéoconférence, comprenant les étapes suivantes :
afficher sur au moins une interface utilisateur (4) utilisée par un participant (3) à ladite session de vidéoconférence une image principale contenant des messages principaux relatifs à une présentation ou un sujet associé(e) à ladite session de vidéoconférence et au moins une image secondaire relative à un élément de présence sociale pendant ladite session de vidéoconférence ;
**caractérisé en ce que** le procédé comprend en outre les étapes suivantes :
calculer (S₀), pendant une étape de planification préalable à ladite session de vidéoconférence, un score de complexité sur la base d'une estimation d'un niveau de complexité et/ou de la connaissance préalable du participant à ladite présentation ou audit sujet ; et
adapter automatiquement (S₃), pendant ladite session de vidéoconférence, la prépondérance de ladite image principale et/ou de ladite au moins une image secondaire sur ladite interface utilisateur sur la base dudit score de complexité.

2. Procédé selon la revendication 1, dans lequel le calcul (S₀) d'un score de complexité sur la base d'une estimation du niveau de complexité de ladite présentation ou dudit sujet comprend la réception (S_{11'}), depuis un présentateur (2) de ladite présentation ou dudit sujet, pendant ladite étape de planification, d'une déclaration explicite dudit niveau de complexité.

3. Procédé selon la revendication 1, dans lequel le calcul (S₀) d'un score de complexité sur la base d'une estimation du niveau de complexité de ladite présentation ou dudit sujet comprend le préchargement (S₁₁) de diapositives de présentation pendant ladite étape de planification, et la déduction (S₁₂) d'une estimation dudit niveau de complexité d'après une analyse de texte desdites diapositives de présentation.

4. Procédé selon la revendication 3, dans lequel la déduction (S₁₂) d'une estimation dudit niveau de complexité d'après une analyse de texte desdites diapositives de présentation est effectuée sur la base d'une diapositive ou d'un groupe de diapositives à la fois.

5. Procédé selon l'une quelconque des revendications 1 à 4, dans lequel le calcul (S₀) d'un score de complexité sur la base d'une estimation de la connaissance préalable du participant à ladite présentation ou audit sujet comprend la réception (S_{21'}) depuis ledit participant, pendant ladite étape de planification, d'une déclaration explicite de sa connaissance préalable.

6. Procédé selon l'une quelconque des revendications 1 à 4, dans lequel le calcul (S₀) d'un score de complexité sur la base d'une estimation de la connaissance préalable du participant à ladite présentation ou audit sujet comprend l'extraction (S₂₁) depuis au moins une base de données (10) d'informations rattachant ledit participant (3) à ladite présentation ou audit sujet.

7. Procédé selon l'une quelconque des revendications 1 à 6, dans lequel l'adaptation (S₃) de la prépondérance comprend la modification des tailles et/ou de la disposition relatives de ladite image principale et de ladite au moins une image secondaire.

8. Procédé selon l'une quelconque des revendications 1 à 7, dans lequel l'adaptation (S₃) de la prépondérance comprend l'augmentation ou la réduction des interactions possibles dudit participant avec ladite au moins une image secondaire.

9. Procédé selon l'une quelconque des revendications 1 à 8, dans lequel l'adaptation (S₃) de la prépondérance comprend l'activation ou la désactivation de l'affichage de ladite au moins une image secondaire.

10. Procédé selon l'une quelconque des revendications 1 à 9, dans lequel l'adaptation (S₃) de la prépondérance comprend la modulation d'un volume d'un message audio lu en relation avec ladite image principale ou ladite au moins une image secondaire.

11. Procédé selon l'une quelconque des revendications précédentes, dans lequel ledit élément de présence sociale comprend une liste de participants à ladite session de vidéoconférence, ou une vidéo, ou une zone de messagerie instantanée.

12. Serveur de vidéoconférence (1) destiné à gérer une session de vidéoconférence pendant laquelle une image principale contenant des messages principaux relatifs à une présentation ou un sujet associé(e) à ladite session de vidéoconférence et au moins une image secondaire relative à un élément de présence sociale sont affichées sur au moins une interface utilisateur distante (4) utilisée par un participant (3) à ladite session de vidéoconférence, **caractérisé en ce que** ledit serveur de vidéoconférence (1) est adapté pour calculer, pendant une étape de planification préalable à ladite session de vidéoconférence, un score de complexité sur la base d'une estimation d'un niveau de complexité et/ou de la connaissance préalable du participant à ladite présentation ou audit sujet, de sorte que la prépondérance de ladite image principale et/ou de ladite au moins une image secondaire sur ladite interface utilisateur (4) puisse être automatiquement adaptée, pendant ladite session de vidéoconférence, sur la base dudit score de complexité.

13. Serveur de vidéoconférence (1) selon la revendication 12, comprenant un module de planification d'évènement (5) qui est adapté pour recevoir une inscription dudit participant (3) à ladite session de vidéoconférence, ledit module de planification d'évènement (5) comprenant :
un module d'évaluation de présentation (7) adapté pour évaluer, avant ladite session de vidéoconférence, ledit niveau de complexité à partir de diapositives de présentation préchargées ;
un module d'évaluation de connaissance de l'utilisateur (9) adapté pour évaluer, avant ladite session de vidéoconférence, la connaissance préalable dudit participant à partir des informations préstockées dans une base de données de connaissance de l'utilisateur (10) ;
un module d'évaluation de complexité (12) adapté pour calculer et délivrer ledit score de complexité sur la base dudit niveau de complexité et/ou de ladite connaissance préalable du participant.

14. Serveur de vidéoconférence (1) selon la revendication 13, comprenant en outre un module d'optimisation d'immersion (13) adapté pour recevoir ledit score de complexité et pour définir des paramètres de prépondérance liés à ladite image principale et/ou à ladite au moins une image secondaire sur la base dudit score de complexité.

15. Serveur de vidéoconférence (1) selon la revendication 14, dans lequel lesdits paramètres de prépondérance liés à ladite image principale et/ou à ladite au moins une image secondaire comprennent des paramètres commandant une ou plusieurs actions parmi le groupe d'actions suivantes :
modification des tailles et/ou de la disposition relatives de ladite image principale et de ladite au moins une image secondaire ;
augmentation ou réduction des interactions possibles dudit participant avec ladite au moins une image secondaire ;
activation ou désactivation de l'affichage de ladite au moins une image secondaire ;
modulation d'un volume d'un message audio à lire en relation avec ladite image principale ou ladite au moins une image secondaire.

16. Dispositif d'utilisateur permettant à un participant à une session de vidéoconférence de se connecter à un serveur de vidéoconférence (1), dans lequel ledit dispositif d'utilisateur comprend :
une interface utilisateur (4) adaptée pour afficher, pendant ladite session de vidéoconférence, une image principale contenant des messages principaux relatifs à une présentation ou à un sujet associé(e) à ladite session de vidéoconférence et au moins une image secondaire relative à un élément de présence sociale ;
**caractérisé en ce que** le dispositif d'utilisateur comprend en outre
un récepteur destiné à recevoir des flux de données associés auxdits messages principaux et à ladite au moins une image secondaire, et un score de complexité depuis un serveur de vidéoconférence, dans lequel ledit score de complexité est calculé pendant une étape de planification préalable à ladite session de vidéoconférence et est basé sur une estimation d'un niveau de complexité et/ou de la connaissance préalable du participant à ladite présentation ou audit sujet ; et
un module d'optimisation d'immersion (13) qui est adapté pour définir des paramètres de prépondérance liés à ladite image principale et/ou ladite au moins une image secondaire sur la base dudit score de complexité ;
un module de commande destiné à adapter automatiquement la prépondérance de ladite image principale et/ou de ladite au moins une image secondaire sur ladite interface utilisateur (4), pendant ladite session de vidéoconférence, sur la base desdits paramètres de prépondérance.

17. Dispositif d'utilisateur selon la revendication 16, dans lequel lesdits paramètres de prépondérance liés à ladite image principale et/ou ladite au moins une image secondaire comprennent des paramètres commandant une ou plusieurs actions parmi le groupe d'actions suivantes :
modification des tailles et/ou de la disposition relatives de ladite image principale et de ladite au moins une image secondaire ;
augmentation ou réduction des interactions possibles dudit participant avec ladite au moins une image secondaire ;
activation ou désactivation de l'affichage de ladite au moins une image secondaire ;
modulation d'un volume d'un message audio à lire en relation avec ladite image principale ou ladite au moins une image secondaire.
